# EUROPEAN PATENT APPLICATION

(11) **EP 0 818 496 A2**
(43) Date of publication of application: **14.01.1998**
(21) Application number: 97110707.3
(22) Date of filing: 01.07.1997
(51) Int. Cl.: C08J 3/03, C08L 57/04, C09D 157/04

(54) **Method for making aqueous emulsions of functionalized organic polymers**

(30) Priority: 09.07.1996 US 677054
(71) Applicant: DOW CORNING CORPORATION, Midland Michigan 48686-0994 (US)
(72) Inventor: Liles, Donald Taylor, Midland, Michigan 48640 (US); Murray, David Logan, Fall Branch, Tennessee 37656 (US)
(74) Representative: Fleischer, Holm Herbert, Dr.

(57) **Abstract**

There is claimed herein an aqueous emulsion comprising a functionalized organic polymer formed by mixing (a) a preformed aqueous emulsion comprising water, particles containing a plurality of silanol modified organic polymer molecules dispersed in the water, and a surfactant; (b) a functionalizing silane and (c) a tin catalyst. Depending on reaction conditions, these emulsions are predominantly non-precrosslinked and photocurable compositions that are crosslinked after application in either the wet or dry state.

## Description

The invention relates to aqueous emulsions comprising functionalized organic polymers and to methods for their preparation.

Environmental concerns are leading to changes in the technology for producing coatings. Of particular concern is the amount of volatile organic compounds (VOC) released into the atmosphere from such coatings. In water-based coatings, volatile solvents are used to promote coalescence and film formation of the latex particles. This is usually accomplished by preparing a dispersed polymer or copolymer having a glass transition temperature (Tg) above room temperature and by next plasticizing it with a volatile solvent to effectively lower its Tg and form a film at room temperature. Evaporation of the solvent after film formation leaves a polymer that was in effect applied below its actual Tg; hence no external heating is required to achieve film formation. Although this concept works well, it is becoming increasingly less popular as the levels of VOC in coatings are reduced due to more stringent regulation throughout the world.

One method for overcoming this use of solvent is to crosslink emulsion polymers after removal of water. Crosslinking leads to increased mechanical properties of the polymer film and under the proper conditions, it can reduce the amounts of solvents used for coalescence and film formation. However, the available choices for crosslinking water-based coatings after water removal are limited.

One method of crosslinking the emulsion polymers has been to copolymerize organic monomers with silicon compounds having groups which hydrolyze in water to form silanol groups. Depending on the reagents and the specific reaction conditions, these silanol modified organic polymers may be either crosslinked or noncrosslinked.

Heretofore, a method has not existed for the preparation of functionalized organic polymers from those silanol modified organic polymers. The term "functionalized" as used herein refers to a group which is capable of further reaction. These functionalized organic polymers are then reacted with other compounds to improve certain properties of the dried composition, such as adhesion; or mixed with a photoinitiator and crosslinked upon exposure to ultraviolet radiation. In preferred embodiments, this crosslinking also occurs after application in either the wet or dry state. The resulting films are useful as coatings, paints and sealants.

An objective of this invention is to prepare an aqueous emulsion comprising a functionalized organic polymer.

Another objective is to prepare an aqueous emulsion comprising a functionalized organic polymer which is crosslinked by ultraviolet radiation after application in either the wet or dry state.

The objectives of this invention are met by preparing an aqueous emulsion comprising a functionalized organic polymer formed by mixing (a) a preformed aqueous emulsion comprising water, particles of silanol modified organic polymer dispersed in water, and a surfactant; (b) a functionalizing silane and (c) a tin catalyst.

The present invention is a method for making an aqueous emulsion comprising the product formed by mixing:
(A) a preformed aqueous emulsion comprising water, particles of silanol modified organic polymer dispersed in water and a surfactant;
(B) a functionalizing silane having the formula RₙQSiX₃₋ₙ or partial hydrolysis and condensation products thereof where
   Q is an organic functional group that does not prevent a condensation reaction between X and a silanol modified organic polymer,
   R is Q or a saturated monovalent hydrocarbon group having from 1 to 6 carbon atoms,
   X is a hydrolyzable group, and
   n is 0, 1 or 2; and
(C) an organotin catalyst.

The preformed aqueous emulsion comprising water, particles of silanol modified organic polymer and a surfactant is prepared by methods well known in the art such as those described by US-As 3,449,293; 3,575,910; 3,706,697; 3,729,438; 3,814,716; 3,898,300 and 5,214,095 which show suitable methods of forming silanol modified organic polymers via emulsion polymerization. An artificial emulsion can also be prepared such that the silanol modified organic polymers are preformed and then emulsified as described in JP-A 59/6219.

Normally, an emulsion copolymerization is performed using one or more organic monomers, capable of undergoing free radical emulsion polymerization and either a copolymerizable silane, a copolymerizable silazane or a copolymerizable siloxane in the presence of a surfactant. As used herein, the term "copolymerizable silane" refers to silanes having a group capable of reading with a monomer and at least one hydrolyzable group as defined herein. The terms "copolymerizable silazane" and "copolymerizable siloxane" refer to silazanes and siloxanes respectively, having a group capable of reacting with a monomer. The term "copolymerizable silicon compound" refers to copolymerizable silanes, copolymerizable silazanes and copolymerizable siloxanes as defined above. The ratio of these monomers may be varied as desired; however, it is preferred that the polymer contain approximately 0.1 to 20 weight percent of copolymerizable silicon compound, based on the total weight of the polymer, and more preferably 1 to 3 weight percent of copolymerizable silicon compound on the same basis.

Useful monomers herein are vinyl acetate, styrene, methyl styrene, t-butyl styrene, acrylic esters such as ethyl acrylate, n-butyl acrylate, tertiary butyl acrylate, isobutyl acrylate, amyl acrylate, ethyl butyl acrylate, 2-ethylhexyl acrylate, octyl acrylate, nonyl acrylate, decyl acrylate, tridecyl acrylate, tetradecyl acrylate, hexadecyl acrylate, octadecyl acrylate, methylmethacrylate, butylmethacrylate, acrylic acid and methacrylic acid.

Suitable copolymerizable silanes are vinyltrimethoxysilane, vinyltris(2-methoxyethoxy)silane, methylvinyldimethoxysilane, methylvinyldiethoxysilane, dimethylvinylmethoxysilane, dimethylvinylethoxysilane, allyltrimethoxysilane, allylmethyldimethoxysilane, allyldimethylmethoxysilane, 3-methacryloxypropyltrimethoxysilane, 3-methacryloxypropylmethyldiethoxysilane and 3-methacryloxypropyldimethylethoxysilane.

Representative copolymerizable silazanes include divinyltetramethyldisilazane, bis(3-methacryloxypropyldimethyl)disilazane and methylvinylcyclosilazanes.

Useful copolymerizable siloxanes are divinyltetramethyldisiloxane bis(3-methacryloxypropyldimethyl)disiloxane and methylvinylcyclosiloxanes.

The organic monomer and copolymerizable silicon compound are copolymerized in water in the presence of a surfactant and an initiator. Any conventional anionic or nonionic surfactant, and mixtures thereof, can be used in the aqueous dispersion of this invention. Such surfactants are well know in the art and are more fully enumerated in "Synthetic Detergents" by J. W. McCutcheon, published by MacNair-Dorland Company, New York. Illustrative examples of such surfactants are alkali metal and ammonium salts of long chain alkyl sulfates or sulfonates and the alkylene oxide condensates of long chain alcohols, fatty acids and the like. Anionic surfactants are preferred, with TRITON X-200® (available from Union Carbide Corporation, Danbury, Ct.), which is an aqueous solution of an alkylaryl polyether sodium sulfonate, is more preferred. The amount of surfactant employed ranges from 0.25 to 7 parts by weight, based on 100 parts by weight of polymer.

An initiator is also necessary to begin the emulsion polymerization and any free radical initiator, or mixtures thereof, known in the art may be used. Examples of such initiators include peroxides, such as potassium persulfate; diazo compounds such as azobis(isobutylnitrile) and the redox type initiators. Molecular weight of the polymer varies inversely with initiator concentration; so excessive quantities of initiator should be avoided. Amounts ranging from 0.1 to 5 weight percent, based on weight of monomers, is normally sufficient, with 0.5 weight percent being preferable.

Other ingredients such as a buffer compound for controlling pH may also be added as desired.

While it is preferred to employ only one organic monomer and one copolymerizable silicon compound at any given time, if desired, the emulsion polymers can be prepared using mixtures of two or more different organic monomers; or two or more different copolymerizable silicon compounds; and such types of compounds are covered herein by the term "silanol modified organic polymer".

Thus, our silanol modified organic polymers are either copolymers or terpolymers of organic monomers and copolymerizable silicon compounds. Preferably, our silanol modified organic polymers comprise a copolymer of an organic monomer and a copolymerizable silicon compound.

The particles of silanol modified organic polymer have an average size of 0.1 to 1 micrometers, preferably from 0.1 to 0.2 micrometers, and are characterized by a weight average molecular weight of greater than 10,000 and preferably above 100,000. It is also preferred that this preformed emulsion have a solids content ranging from 20 to 60 weight percent, most preferably 50 weight percent.

While not bound by any particular theory, we believe that under the proper conditions the hydrolyzable groups on the copolymerizable silanes are hydrolyzed by the water in the system resulting in the formation of silanol groups. Similarly, we believe the Si-O-Si and Si-NR-Si bonds of the copolymerizable siloxanes and copolymerizable silazanes, respectively, are cleaved by water under certain conditions, such as low pH and elevated temperatures, to produce silanol groups. This is best accomplished by running the emulsion polymerization at a pH of from 1 to 4, and at a temperature of from 50°C. to 90°C. Thus, we refer to the polymer resulting from the emulsion polymerization of organic monomers with a copolymerizable silicon compound as a silanol modified organic polymer.

The functionalizing silane is a silane having the following formula RₙQSiX₃₋ₙ or partial hydrolysis and condensation products thereof.

The group Q of the functionalizing silane is an organic functional group which does not prevent a condensation reaction between X and the silanol modified organic polymer molecule. By "functional group", it is meant a reactive group that may be used in further chemical reactions.

The term "condensation reaction" as used herein means a type of chemical reaction in which two or more molecules are bonded together with the separation of water, alcohol, or other simple substances. It is anticipated that there may be certain organic functional groups which, because of stearic factors, would prevent a condensation reaction between the hydrolyzable group X and the silanol modified organic polymer. Organic functional groups precluding the condensation reaction are hereby excluded from the definition of Q.

Preferred Q groups include acryloxyalkylene, methacryloxyalkylene, vinyl, ally, chloroalkylene, hexenyl, acrylamidoalkylene, trifluoromethylalkylene, glycidoxyalkylene, cyanoalkylene, mercaptoalkylene, aminoalkylene, a group represented by the formula
HCl•ZN(H)-CH₂CH₂-N(Z)-CH₂CH₂CH₂- and a group
of the formula HCl•ZN(H)-CH₂CH₂-N(H)-CH₂CH₂CH₂-, wherein Z is -CH₂(C₆H₄)-CH=CH₂. The alkylene group is a divalent saturated hydrocarbon group having from 2 to 6 carbon atoms such as ethylene, propylene, butylene and hexylene. It is preferred that the alkylene group is propylene.

R is Q or a saturated monovalent hydrocarbon group of from one to six carbon atoms. Preferably R is Q or an alkyl radical having 1 to 4 carbon atoms.

X can be any hydrolyzable group including any group attached to silicon which is hydrolyzed by water at room temperature. Suitable hydrolyzable groups of X are hydrogen atom; halogen atoms such as chlorine, bromine, fluorine or iodine; groups of the formula -OT where T is any hydrocarbon or halogenated hydrocarbon group such as methyl, ethyl, isopropyl, octadecyl, allyl, hexenyl, cyclohexyl, phenyl, benzyl, beta-phenylether, 2-chloroethyl, chlorophenyl, 3,3,3-trifluoropropyl or bromocyclohexyl; any hydrocarbon ether radical such as 2-methoxyethyl, 2-ethoxyisopropyl, 2-butoxyisobutyl, p-methoxyphenyl or -(CH₂CH₂O)₂CH₃; any acyloxy group such as acetoxy, benzoyloxy, propionoxy or acryloxy; or any amino radical such as NH₂, dimethylamino, diethylamino, ethylmethylamino, diphenylamino, methylphenylamino or dicyclohexylamino. X can also be any aminoxy radical of the formula -ONT₂ or -ONT', in which T is as above, and T' is any divalent hydrocarbon radical both valences of which are attached to the carbon, such as hexylene, pentylene or octylene; any ketoxime radical of the formula -ON=CT₂ or -ON=CT' in which T and T' are defined above; ureido groups of the formula -N(T)CONT''₂ in which T is defined above and T'' is H or any of the T radicals above; carbamate groups of the formula -OOCNTT'' in which T and T'' are defined above; or carboxylic amide radicals of the formula -NTC=O(T'') in which T and T'' are defined above. X can also be the sulfate group or the sulfate ester groups of the formula -OSO₂(OT) where T is as defined above; the cyano group; the isocyanate group; and the phosphate or phosphate ester groups of the formula -OPO(OT)₂ where T is as above.

Preferred hydrolyzable groups of the invention are alkoxy groups. More preferred are alkoxy groups having 1 to 4 carbon atoms. Illustrative examples of the alkoxy groups are methoxy, ethoxy, propoxy, butoxy, isobutoxy, pentoxy and hexoxy; alkoxyalkoxy radicals such as methoxymethoxy or ethoxymethoxy; and alkoxyaryloxy such as ethoxyphenoxy. The most preferred alkoxy groups are methoxy or ethoxy.

The letter n is 0, 1 or 2. Preferably, n is 0 or 1 and more preferably n is 1.

Specific examples of suitable functional zing silanes include 3-acryloxypropylmethyldimethoxysilane, 3-acryloxypropyldimethylmethoxysilane, 3-acryloxypropyltrimethoxysilane, 3-acryloxypropylmethyldiethoxysilane, 3-methacryloxypropylmethyldimethoxysilane, 3-methacryloxypropyldimethylmethoxysilane, 3-methacryloxypropyltrimethoxysilane, 3-methacryloxypropylmethyldiethoxysilane, vinylmethyldimethoxysilane, 5-hexenylmethyldimethoxysilane, allylmethyldimethoxysilane, 3-acrylamidopropyldimethoxysilane, 3-mercaptopropylmethyldimethoxysilane, (3-glycidoxypropyl)methyldiethoxysilane, 2-(3,4)-epoxycyclohexylmethyldiethoxysilane, 4-(aminophenyl)-2-ethylmethyldimethoxysilane, 3,3,3-trifluoropropylmethyldimethoxysilane, 3-chloropropylmethyldimethoxysilane, 3-cyanopropylmethyldimethoxysilane, phenylmethyldimethoxysilane, and silanes represented by the formulas
HCl·ZHN-CH₂CH₂-NZ-CH₂CH₂CH₂-SiCH₃(OMe)₂ or HCl·ZN(H)-CH₂CH₂-N(H)-CH₂CH₂CH₂-SiCH₃(OMe)₂, wherein Me is, and hereafer denotes, a methyl radical and Z is -CH₂(C₆H₄)-CH=CH₂.

In addition, if the functionalized organic polymer is crosslinked at some time using photochemical means, it is preferred that the functionalizing silane contain Q groups selected from acryloxypropylene, methacryloxy-propylene, mercaptopropylene or propylene vinylether groups since they are photochemically active.

The most preferred functionalizing silane is 3-acryloxypropylmethyldiethoxysilane.

The organotin curing catalyst (II) is an organic salt of tin and is illustrated by tin (II) carboxylates, such as stannous oleate or stannous naphthanate; dialkyl tin (IV) carboxylates, such as dibutyltin diacetate or dibutyltin dilaurate; and tin (IV) stannoxanes, such as (Bu)₂SnCl-O-(Bu)₂OH, in which Bu is, and hereafter denotes, a butyl radical, as claimed in US-A 5,034,455. The catalyst is preferably stannous octoate.

To prepare the composition of this invention, an organotin curing catalyst and a functionalizing silane are added to the preformed aqueous emulsion of silanol modified organic polymer. The functionalizing silane migrates into the particles containing said silanol polymer where it condenses with the silanol groups also present on said polymer in the presence of an organotin catalyst. It is preferred that said preformed emulsion is prepared from a monohydrolyzable copolymerizable silane, as this usually leads to a predominantly non-precrosslinked emulsion polymer. Further, reaction of the silanol modified organic polymer with a functionalizing silane having only two hydrolyzable groups does not lead to any appreciable crosslinking. This is very desirable as it enables one to crosslink the functionalized organic polymer after application and either in the wet emulsion form or most preferably after the emulsion has dried by water removal.

Although the order of addition is not critical, it is preferred to first add with stirring from 0.01 to 5 parts by weight, based on 100 parts by weight of the silanol modified organic polymer, and to next add 0.5 parts by weight, on the same basis, of catalyst to the preformed aqueous emulsion. From 0.1 to 20 parts by weight, based on 100 parts by weight of the silanol modified organic polymer, preferably 1 to 3 parts by weight on the same basis, of the functionalizing silane is then added to this mixture also with stirring. The resultant emulsion is then allowed to age. Usually, this aging process requires from one half hour to four hours at room temperature. When the functionalizing silane content is less than 0.1 part by weight, per 100 parts of the silanol modified organic polymer, incomplete condensation is observed. When this component exceeds 20 parts by weight; on the same basis, the by-products formed when the hydrolyzable group X is reacted will destabilize the emulsion. During the aging process, which occurs at either room temperature or elevated temperatures, pH of the emulsion is maintained between 4 and 10.5.

As already indicated, the functionalized organic emulsion polymers of the present invention operate to improve certain properties of finished products. For example, by attaching certain reactive functional groups directly to our emulsion polymer, adhesion of the dried emulsion polymer is improved. Said polymers are also useful to prepare a photocurable composition which crosslinks upon exposure to sunlight or ultraviolet light.

A photocurable coating of this invention is prepared by mixing our preformed aqueous emulsion with selected functionalizing silanes and by then adding a photoinitiator thereto. The functionalizing silane in this case must include a photochemically reactive group. In this instance, it is preferred that the functional group be selected from acryloxypropylene, methacryloxypropylene, mercaptopropylene or propylene vinylether.

The photoinitiator can be only one, or a combination, of the many photoinitiators that form radical species when irradiated with ultraviolet light or exposure to sunlight. This photoinitiator also has to be compatible with the dispersed phase of the emulsion. Preferred photoinitiators are benzophenone and Darocure® 1173, which has the formula, C₆H₅=C(O)-C(CH₃)₂OH.

The photoinitiator is used in amounts sufficient to provide the desired cure rate. If too little is used, the cure takes longer than desired. If too much photoinitiator is used, the physical and mechanical properties of the wet or dried emulsion is degraded. The preferred amount is from 0.25 to 0.5 part of photoinitiator per 100 parts by weight of functionalized organic polymer.

The photoinitiator may be added at any time to the reaction mixture. For example, the photoinitiator can be added to the preformed aqueous emulsion before the functionalizing silane is reacted therewith. It is preferred, however, that the photoinitiator is added to the aqueous emulsion after the functionalized organic polymer is formed.

The photoinitiator in our emulsion reacts in the presence of the ultraviolet light to form radicals which cause reactions between the functional groups on the functionalized organic polymer. For example, the radicals formed by ultraviolet light and the photoinitiator cause the functional groups to react with each other, froming crosslinks. These crosslinking reactions proceed in both wet and dried emulsions. In a preferred embodiment, the water is first removed from the emulsion and the dried emulsion is then exposed to ultraviolet light to cause the crosslinking. The emulsions containing the mercaptoalkylene group, as well as those containing the acryloxy propylene group, as the functional group are crosslinked by exposure to ambient sunlight, since these groups are very reactive.

Additional ingredients can be added to the emulsion to change the properties of the dried emulsion. The physical strength of the dried emulsion is further increased by the addition of reinforcing filler. Reinforcing fillers such as silica and carbon black are suitable. Extending filler, such as clay and calcium carbonate; pigments; dyes; thickening agents and the like can be added as long as they do not adversely affect the properties or storage stability of the wet or dried forms of our emulsion.

The amount of ultraviolet radiation necessary to crosslink our functionalized organic emulsion polymer will depend on a number of variables and, therefore, the optimum amount should be determined experimentally. Factors such as wavelength of UV light, amount and type of photoreactive functional groups on the organic polymer, quantity and type of photoinitiator and reactor design will all influence the amount of ultraviolet radiation required to crosslink the functionalized organic polymer.

The claimed functionalized organic emulsion polymer is used for surface coating compositions. The dried emulsion is suitable as a coating material, an adhesive or a sealant.

### Example 1

Into a flask were added 758 g of deionized (DI) water, 72.9 g of a 28 percent aqueous solution of an alkyl aryl polyether sodium sulfonate (TRlTON® X-200), 3.75 g of ammonium persulfate and 3.0 g of sodium bicarbonate. The mixture was stirred for 30 minutes at room temperature while a nitrogen purge was maintained. 225 g of inhibitor-free ethyl acrylate (prepared by passing 725 g of ethyl acrylate through a bed of ion exchange resin) were added to the flask all at once, and stirring was maintained while heating was started. Approximately 30 minutes later, when the temperature reached 54°C., an exotherm occurred and heating was stopped. When a temperature maximum was obtained (90.5°C.) approximately 30 minutes, thereafter heat was again applied to the flask. After 20 minutes, the temperature had stabilized at 70°C. and an additional 225 g of the ethyl acrylate were added dropwise over a 1 hour period while the temperature was maintained at 70°C. Next, a solution of 4.39 g vinyldimethylethoxysilane in 225 g of ethyl acrylate was added to the flask dropwise also over a 1.5 hour period. After all of the feed solution had been added, the emulsion was heated with stirring for 60 minutes at 70°C. The emulsion was allowed to cool to room temperature with stirring. The contents of the flask was filtered through a 149 mm polypropylene filter and later heated to 50°C. for 30 minutes under vacuum using a rotary evaporator. 5 g of material remained in the filter and 103 g of condensate were collected in the evaporator receiver. The recovered emulsion weighed 1351.2 g and it had a non-volatile content of 49.4 percent by weight. The emulsion had a mean particle size of 168 nm and 99 percent of the particles were less than 250 nm, as determined by light scattering (NIACOMP®). This latex consisted of an emulsion of poly(ethylacrylate) containing approximately 0.5 mole percent units derived from vinyldimethylethoxysilane.

Films were cast by pouring 11 g of emulsion into 100 mm diameter polystyrene Petri dishes that had been previously coated with a thin film of silicone grease. These emulsion films were allowed to dry at ambient conditions for 7 days after which tensile properties were determined (Instron®). Swelling properties of these films were also determined using ethyl acetate as solvent. Swelling and tensile properties are given in Table 1.

### Example 2

To 100 g of the poly(ethylacrylate) emulsion containing 0.5 mole% units derived from vinyldimethylethoxysilane as described in Example 1 was added 0.25 g of stannous octanoate. This was followed by a dropwise addition of 0.5 g of 3-acryloxypropylmethyldiethoxysilane with stirring. As a photoinitiator, 0.4 g of Darocure® 1173 was then added to the latex.

Films were cast in similar fashion to Example 1. The tensile and swelling properties of these films before and after exposure to ultraviolet (UV) radiation are given in Table 1.

### Example 3

A formulation similar to Example 2 was prepared except 0.50 g of a 50% active emulsion of dioctyltin-dilaurate was substituted for the stannous octanoate. Films were cast in similar fashion to Example 1. The tensile and swelling properties of these films before and after exposure to UV radiation are given in Table 1.

### Example 4

A formulation similar to Example 2 was prepared except the photoinitiator, Darocure® 1173 was omitted. Films were cast in similar fashion to Example 1. The tensile and swelling properties of these films after exposure to UV radiation are given in Table 1.

### Example 5

A formulation similar to Example 3 was prepared except the photoinitiator, Darocure® 1173 was omitted. Films were cast in similar fashion to Example 1. The tensile and swelling properties of these films after exposure to UV radiation are given in Table 1.

**Table 1**

| Tensile and Swelling Properties of the Films from Examples 1-5 | | | | | |
|---|---|---|---|---|---|
| Example | UV Exposure | Stress at 100% psi(MPa) | Yield Stress psi(MPa) | % Elong. to Break | % Swell |
| 1 | NONE | 9(0.06) | 45(0.3) | 1350 | Dissolved |
| 1 | YES | 35(0.24) | 70(0.5) | 1320 | 6800 |
| 2 | NONE | 9(0.06) | 41(0.29) | 1336 | Dissolved |
| 2 | YES | 22(0.15) | 110(0.76) | 1280 | 3690 |
| 3 | NONE | 9(0.06) | 43(0.3) | 1130 | Dissolved |
| 3 | YES | 22(0.15) | 104(0.7) | 997 | 3380 |
| 4 | YES | 14(0.96) | 49(0.34) | 1030 | Dissolved |
| 5 | YES | 15(0.1) | 44(0.3) | 1050 | Dissolved |

### Example 6

Using the same procedure of Example 1, another emulsion was prepared that consisted of an aqueous emulsion of poly(ethylacrylate), containing 1.0 mole percent units derived from divinyltetramethyldisilazane. In this procedure, 12.47 g of (H₂C=CHMe₂Si)₂NH were substituted for the vinyldimethylethoxysilane. This emulsion had a mean particle size of 211 nm with 99 percent of the particles less than 266 nm and it had a non-volatile content of 49.3 percent by weight. The emulsion had a viscosity of 23 (cp) mPa·s (Brookfield, #1 spindle, 60 RPM at 25°C) and a minimum film forming temperature below -5°C. Swelling and tensile properties of films from this emulsion were determined after exposure to UV radiation and are given in Table 2.

### Example 7

To 100 g of the polyethylacrylate emulsion, containing 1 mole% units derived from divinyltetramethyl-disilazane as described in Example 6 was added 0.25 g of stannous octanoate. This was followed by a dropwise addition of 0.5 g of 3-acryloxypropylmethyldiethoxysilane with stirring. As a photoinitiator, 0.4 g of Darocure® 1173 was then added to the latex. Films were cast as described in Example 1. The tensile and swelling properties of these films after exposure to UV radiation are given in Table 2.

### Example 8

A formulation similar to Example 7 was prepared except the stannous octanoate and 3-acryloxypropylmethyldiethoxysilane were omitted. Films were cast as in Example 1. The tensile and swelling properties of these films after exposure to UV radiation are given in Table 2.

### Example 9

Using the same procedure of Example 1, another emulsion was prepared that consisted of an aqueous emulsion of poly(ethylacrylate) containing 2.0 mole percent units derived from divinyltetramethyldisilazane. In this procedure, 24.94 g of (H₂C=CHMe₂Si)₂NH were substituted for the vinyldimethylethoxysilane. This emulsion had a mean particle size of 244 nm with 99 percent of the particles less than 365 nm and it had a non-volatile content of 48.7 percent by weight. The emulsion also had a viscosity of 18.0 (cp) mPa·s)(Brookfield, #1 spindle, 60 RPM at 25°C) and a minimum film forming temperature below -5°C. Swelling and tensile properties of films from this emulsion were determined after exposure to UV radiation and are given in Table 2.

### Example 10

To 100 g of the poly(ethylacrylate) emulsion containing 2 mole% divinyltetramethyldisilazane as described in Example 9 was added 0.25 g of stannous octanoate. This was followed by a dropwise addition of 0.5 g of acryloxypropylmethyldiethoxysilane with stirring. As a photoinitiator, 0.4 g of Darocure® 1173 was then added to the latex. Films were cast as described in Example 1. The tensile and swelling properties of these films after exposure to UV radiation are given in Table 2.

### Example 11

A formulation similar to Example 10 was prepared except the stannous octanoate and cryloxypropyl-methyldiethoxysilane were omitted from the formulation. Films were cast in similar fashion to Example 1. The tensile and swelling properties of these films after exposure to UV radiation are given in Table 2.

**Table 2**

| Tensile and Swell Properties of Films From Examples 6-11 After Exposure to UV radiation | | | | |
|---|---|---|---|---|
| Example | Stress at 100% (psi)(MPa) | Yield Stress (psi)(MPa) | % Elong. to Break | % Swell |
| 6 | 17(0.12) | 61(0.42) | 2130 | 4880 |
| 7 | 23(0.16) | 275(1.9) | 820 | 1918 |
| 8 | 19(0.13) | 70(0.5) | 2085 | 4910 |
| 9 | 16(0.11) | 129(0.9) | 1994 | 5280 |
| 10 | 27(0.19) | 391(2.7) | 731 | 1618 |
| 11 | 18(0.12) | 154(1.1) | 2351 | 4890 |

## Claims

1. A method for preparing an aqueous emulsion comprises mixing:
(A) a preformed aqueous emulsion comprising water, particles of a plurality of silanol modified organic polymer molecules dispersed in water and a surfactant;
(B) a functionalizing silane having the formula RₙQSiX₃₋ₙ or partial hydrolysis and condensation products thereof where
Q is an organic functional group that does not prevent a condensation reaction between X and silanol modified organic polymer,
R is Q or a saturated monovalent hydrocarbon group having from 1 to 6 carbon atoms,
X is a hydrolyzable group,
n is 0, 1 or 2; and
(C) an organotin catalyst.

2. The method according to claim 1, wherein Q is a group selected from the group consisting of an acryloxyalkylene, methacryloxyalkylene, vinyl, allyl , chloroalkylene, hexenyl acrylamidoalkylene, trifluoromethylalkylene, alkylene vinylether, glycidoxyalkylene, cyanoalkylene, mercaptoalkylene, aminoalkylene, a group represented by the formula
HCl.ZN(H)-CH₂CH₂-N(Z)-CH₂CH₂CH₂- or a group
of the formula HCl.ZN(H)-CH_{²}CH_{²}-N(H)-CH₂CH₂CH₂-, wherein Z is -CH₂(C₆H₄)-CH=CH₂ and the alkylene group is a divalent saturated hydrocarbon group having from 2 to 6 carbon atoms.

3. The method according to any of the preceding claims, wherein R is Q or an alkyl radical having 1 to 4 carbon atoms, X is an alkoxy group having 1 to 4 carbon atoms, the alkylene group is propylene and n is 0 or 1.

4. The method according to any of the preceding claims, wherein the organotin catalyst is selected from tin (II) carboxylate or dialkyl tin (IV) carboxylate.

5. The method according to any of the preceding claims further comprising the step of adding a filler.

6. The method according to any of the preceding claims, wherein the functionalizing silane is 3-acryloxypropylmethyldiethoxysilane.

7. The method according to any of claims 1-5, wherein Q is selected from the groups consisting of acryloxypropylene, methacryloxypropylene, mercaptopropylene or propylene vinylether groups and further comprising the step of adding a photoinitiator.

8. A composition comprising a functionalized organic emulsion polymer obtainable by the method according to any of claims 1-6.

9. A photocurable coating composition comprising a functionalized organic emulsion polymer obtainable by the method according to claim 7.

10. A method for curing the photocurable coating composition of claim 9 comprising the step of treating the aqueous emulsion with ultraviolet light.

11. A method for curing the photocurable coating composition of claim 9 comprising the steps of evaporating water to form a dried emulsion and then treating the dried emulsion with ultraviolet light.
